# FASCICULE DE BREVET EUROPEEN

(11) **EP 3 634 779 B1**
(45) Date de publication et mention de la délivrance du brevet: **07.04.2021**
(21) Numéro de dépôt: 18735668.8
(22) Date de dépôt: 07.06.2018
(51) Int. Cl.: B60C 23/00, G01N 29/14, G01N 29/44

(54) **PROCEDE DE CONTROLE ET/OU DE SUIVI DE L'UTILISATION D'UN PNEUMATIQUE**
VERFAHREN ZUR STEUERUNG ODER NACHFÜHRUNG DES BETRIEB EINES REIFENS
METHOD CONTROLLING OR TRACKING THE OPERATION OF A TIRE

(30) Priorité: 08.06.2017 FR 1755104
(43) Date de publication de la demande: 15.04.2020
(73) Titulaire: Compagnie Générale des Etablissements Michelin, 63000 Clermont-Ferrand (FR)
(72) Inventeur: PATURLE, Antoine, 63040 Clermont-Ferrand Cedex 9 (FR)
(74) Mandataire: Roussy, Delphine
(86) Numéro de dépôt international: PCT/FR2018/051335
(87) Numéro de publication internationale: WO 2018/224790

(56) Documents cités:
- EP-A2- 1 229 327
- FR-A1- 2 671 632
- FR-A1- 3 015 036
- US-A1- 2003 136 192

## Description

### DOMAINE TECHNIQUE GENERAL ET CONTEXTE DE L'INVENTION

La présente invention concerne la détermination de conditions de roulage d'un pneumatique sur un sol. Plus précisément, l'invention propose de déterminer un état de fermeté du sol au moyen de l'enregistrement d'un signal acoustique produit par le pneumatique roulant sur la surface du sol.

Il s'avère utile en effet de connaître à tout instant les conditions de roulage d'un pneumatique sur un sol, pour interagir avec le conducteur ou avec les systèmes d'assistance à la conduite, de manière à les informer en temps réel de l'évolution des conditions de roulage, et éventuellement de réagir à celles-ci.

Le procédé est basé sur le constat que la fréquence et l'intensité sonores engendrées par le pneumatique varient en fonction des conditions de roulage du pneumatique sur le sol. Ainsi, une analyse de l'enregistrement d'un signal acoustique produit par le pneumatique roulant sur la surface du sol permet de déterminer certaines conditions de roulage.

On observe toutefois que la précision et la fiabilité de toutes ces méthodes reposent en grande partie sur l'introduction de paramètres supplémentaires tels que la connaissance de la vitesse de roulage, de la température ou encore de la charge du véhicule, du degré d'usure ou du type de sculpture utilisé et, dans les méthodes les plus complexes, de l'enregistrement de l'état visuel de la route située en avant du véhicule. Il est donc nécessaire de combiner des informations en provenance de plusieurs capteurs, ce qui n'est pas sans incidences sur le coût de la mise en oeuvre des dispositifs proposés.

Le brevet FR3015036 décrit une solution sur la seule base d'un enregistrement sonore à la problématique de détermination de l'état météorologique du sol, le type de revêtement, le degré d'usure du pneumatique ou encore le type de sculpture utilisé. Les enregistrements sonores sont réalisés à l'aide d'un microphone placé dans la partie avant d'un passage de roue situé à l'arrière du véhicule. La densité spectrale de la puissance sonore est répartie sur un intervalle de fréquence donné. Ce spectre varie en fonction d'un ensemble de modalités telles que les conditions météorologiques, l'état de la route, le degré d'usure du pneumatique, le type de sculpture du pneumatique.

Toutefois, cette méthode ne permet pas de déterminer certaines conditions de roulage pouvant représenter de l'intérêt pour des applications particulières.

### PRESENTATION DE L'INVENTION

Un but de l'invention est de permettre de déterminer des conditions de roulage d'un pneumatique sur un sol, et en particulier un état de fermeté du sol, sur la seule base d'un enregistrement sonore. A cet effet, il est proposé un procédé de détermination de conditions de roulage d'un pneumatique sur un sol, ledit pneumatique étant monté sur un véhicule, ledit procédé comprenant les étapes dans lesquelles :
- une mesure d'un signal acoustique produit par le pneumatique roulant sur la surface du sol est acquise par un microphone,
- pour chacune d'une pluralité de bandes de fréquence, association à ladite bande de fréquences d'une donnée représentative d'une puissance sonore moyenne mesurée dans ladite bande de fréquence à partir de la mesure du signal acoustique acquise, les données représentatives associées aux différentes bandes de fréquences et issues d'une même mesure formant des variables d'un vecteur associé à ladite mesure,
- détermination de l'état du sol correspondant au vecteur associé à la mesure en mettant en oeuvre une analyse discriminante des données fondée sur une base d'apprentissage, dans lequel le signal acoustique produit par le pneumatique est acquis par un microphone disposé à l'intérieur du pneumatique, l'analyse discriminante fournissant une information sur l'état de fermeté du sol.

Ce procédé est avantageusement complété par les caractéristiques suivantes, prises seules ou en une quelconque de leur combinaison techniquement possible:
- selon l'état de fermeté du sol, on met en outre en oeuvre une détermination d'un niveau de glissement du pneumatique par analyse discriminante des données sur la partie de la base d'apprentissage correspondant audit état de fermeté;
- selon l'état de fermeté du sol, on met en outre en oeuvre une détermination d'un niveau de pression du pneumatique par analyse discriminante des données sur la partie de la base d'apprentissage correspondant audit état de fermeté;
- la base d'apprentissage est formée d'un ensemble de vecteurs représentatifs chacun de conditions de roulage respectives;
- la base d'apprentissage classifie les vecteurs selon au moins deux états de fermeté du sol, l'un correspondant à un état de sol dur, l'autre correspondant à un état de sol mou;
- les vecteurs classés par la base d'apprentissage dans un état correspondant à sol dur comprennent les vecteurs représentatifs de conditions de roulage sur béton bitumeux et terre ultracompacte, et les vecteurs classés par la base d'apprentissage dans un état correspondant à un sol mou comprennent les vecteurs représentatifs de conditions de roulage sur terre labourée.

L'invention concerne également un équipement pour véhicule comprenant:
- un microphone adapté pour être disposé à l'intérieur d'un pneumatique monté sur le véhicule, et configuré pour mesurer un signal acoustique produit par le pneumatique roulant sur la surface du sol, et
- une unité de traitement automatisé de données configurée pour associer à chacune d'une pluralité de bandes de fréquence une donnée représentative d'une puissance sonore moyenne mesurée dans ladite bande de fréquence à partir de la mesure du signal acoustique acquise, les données représentatives associées aux différentes bandes de fréquences et issues d'une même mesure formant des variables d'un vecteur associé à ladite mesure, et pour déterminer l'état du sol correspondant au vecteur associé à la mesure en mettant en oeuvre une analyse discriminante des données fondée sur une base d'apprentissage, l'analyse discriminante fournissant une information sur l'état de fermeté du sol,
l'équipement étant configuré pour mettre en oeuvre le procédé selon l'invention lorsque ledit équipement équipe un véhicule.

De préférence, le microphone est associé à un émetteur sans fil configuré pour transmettre à l'unité de traitement automatisé de données la mesure d'un signal acoustique, ladite unité de traitement automatisé de données étant de préférence configurée pour être disposée à l'extérieur du pneumatique. Dans un autre mode de réalisation, l'unité de traitement automatisé de données est localisée directement à l'intérieur du pneumatique, et le traitement est alors effectué in situ. Dans ce cas, l'émetteur sans fil transmet directement le résultat du traitement par l'unité de traitement automatisé de données. Ceci permet de transmettre des fichiers de plus petite taille, étant donné qu'un fichier sonore représente des millions de données, et ainsi d'économiser de l'énergie utilisée pour la transmission.

L'invention concerne également un véhicule comprenant un équipement selon l'invention, dans lequel le microphone est disposé à l'intérieur d'un pneumatique monté sur le véhicule. De préférence, le microphone est solidaire d'une jante portant le pneumatique.

L'invention concerne également un véhicule comprenant en outre des moyens de géolocalisation, des moyens de synchronisation de l'acquisition acoustique et des données de géolocalisation, et des moyens de transmission de ces données synchronisées à un serveur distant. Ceci permet d'établir, ultérieurement, une cartographie de la fermeté des sols dans un lieu particulier.

### PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:
- la figure 1 illustre de façon schématique un pneumatique monté sur une jante d'un véhicule,
- la figure 2 illustre de façon schématique la déformation subie par un pneumatique muni d'un microphone selon un mode de réalisation possible de l'invention,
- la figure 3 illustre schématiquement un équipement selon un mode de réalisation de l'invention appliqué à un véhicule agricole,

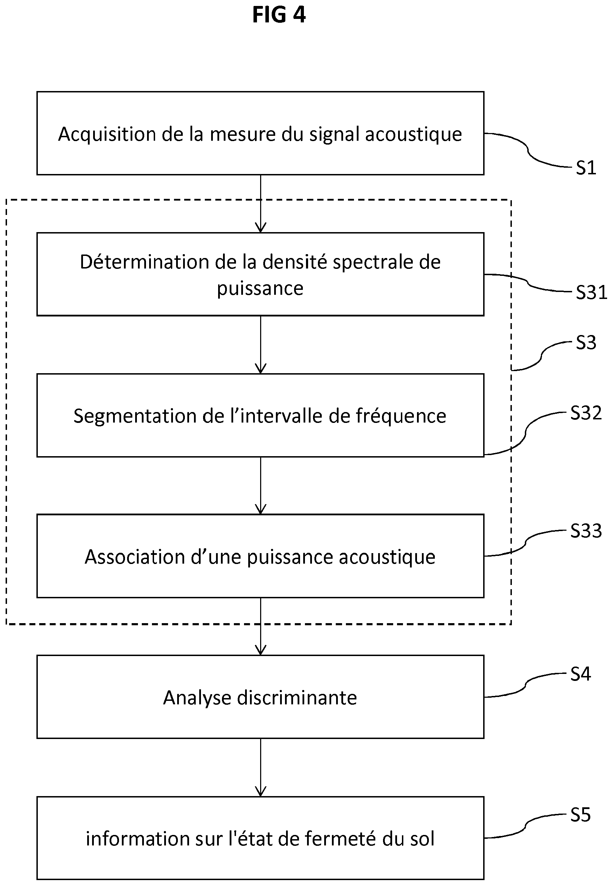

- la figure 4 est un diagramme illustrant schématiquement plusieurs étapes d'un procédé selon un mode de réalisation possible de l'invention,
- la figure 5 représente des spectres moyens de mesures de signaux acoustiques pour un même pneumatique roulant sur des sols présentant différents états de fermeté,
- la figure 6 représente une répartition des mesures dans un espace discriminant réduit à deux dimensions selon l'état de fermeté du sol,
- la figure 7 représente une répartition des mesures dans un espace discriminant réduit à deux dimensions selon le glissement du pneumatique,
- la figure 8 représente une répartition des mesures dans un espace discriminant réduit à une dimension selon la pression de gonflage du pneumatique.

### DESCRIPTION DETAILLEE

### Rappels généraux sur la structure d'un pneu

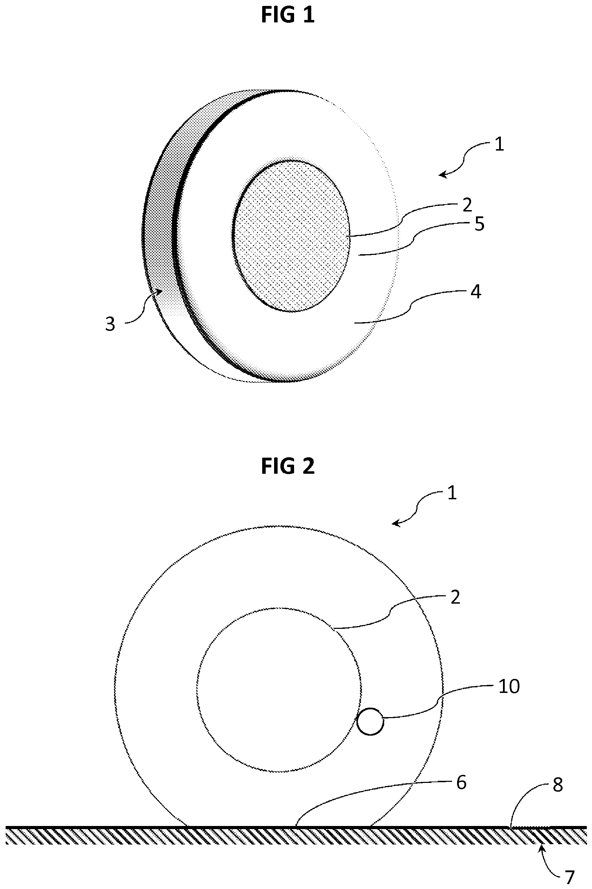

La figure 1 illustre un pneumatique 1 monté sur une jante 2. Un tel pneumatique 1 comprend d'une part une zone sommet 3 constituant une bande de roulement présentant des sculptures, et d'autre part des flancs 4 se terminant par des zones basses 5. Celles-ci comportent généralement une tringle et un talon pour permettre le montage du pneumatique 1 sur la jante 2. La jante 2 est elle-même reliée au véhicule par un essieu (non représenté). Le pneumatique 1 permet ainsi la liaison entre le véhicule et le sol.

Un pneumatique 1 est comprend enveloppe flexible renfermant un intérieur gazeux sous pression, typiquement de l'air. Le pneumatique est soumis à une force appliquée par le véhicule, via l'essieu et la jante 2, en direction du sol 7. Cette force tire son origine de la charge à l'essieu, résultant du poids du véhicule.

La jante 2 étant indéformable, cette force s'appliquant sur le pneumatique 1 déforme celui-ci lorsque le pneumatique 1 est au contact de la surface 8 du sol 7, comme illustré sur la figure 2. La partie du sommet 3 sous la jante 2 s'aplatit, ce qui augmente la surface de contact du pneumatique 1 avec le sol, tandis que les flancs 4 se gonflent : le pneumatique 1 se déforme. Cette déformation est d'autant plus prononcée que la pression est faible. La nature du sol 7 influe également sur cette déformation, et en particulier l'état de fermeté de ce sol 7. En effet, un sol dur ne se déforme pas ou peu, tandis qu'un sol mou se déforme sous l'action du pneumatique 1, de sorte que la déformation du pneumatique 1 est moindre, en partie transférée au sol 7.

### Exemple d'équipement

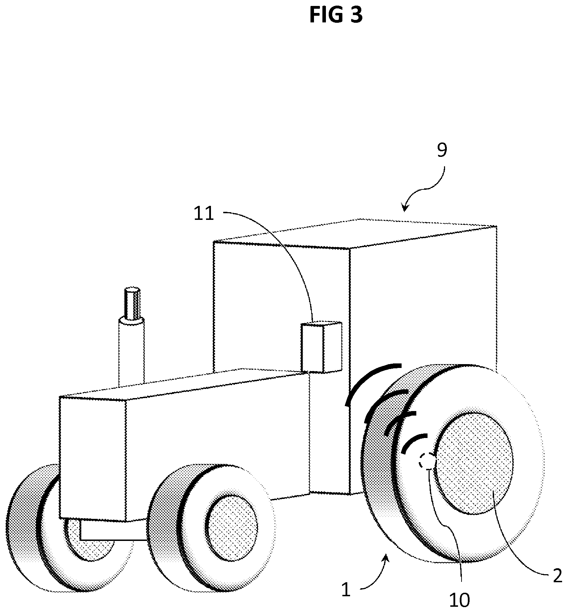

En référence à la figure 3 qui illustre schématiquement un équipement selon un mode de réalisation de l'invention appliqué à un véhicule agricole 9, un tel équipement comprend un microphone 10 et une unité de traitement automatisée de données 11 comprenant au moins une mémoire et un processeur. Ils peuvent être comme ici séparés et distincts, ou bien être disposés au sein d'un même dispositif. De préférence, le microphone 10 et l'unité de traitement automatisée de données 11 sont physiquement distincts. L'unité de traitement automatisée 11 peut ainsi être disposée dans l'habitacle du véhicule 9, et notamment comprendre, outre la mémoire et le processeur, des moyens d'affichage tel qu'un écran ou des indicateurs lumineux permettant d'indiquer au conducteur les conditions de roulage. L'unité de traitement automatisée 11 peut également transmettre les conditions de roulage déterminée à un système d'assistance à la conduite ou y être incorporée, de sorte que des paramètres de conduite du véhicule 9 puissent être automatiquement ajustés aux conditions de roulage déterminées.

Par ailleurs, disposer d'un microphone 10 et d'une unité de traitement automatisée de données 9 physiquement distincts permet de les disposer à des endroits différents. Comme illustré sur la figure 2, le microphone 10 est disposé à l'intérieur du pneumatique 1, c'est-à-dire à l'intérieur de la cavité définie par le pneumatique1 et qui renferme l'air sous pression. Plus précisément, le microphone 10 est ici solidaire de la jante 2. Le microphone 10 peut par exemple être fixé à un collier entourant la gorge de la jante 2 à l'intérieur du pneumatique 1. Dans l'exemple illustré, un seul pneumatique 1 est muni d'un microphone 10. Il est cependant possible de prévoir que plusieurs pneumatiques 1 du véhicule 9 soient munis d'un microphone 10, voire qu'un même pneumatique 1 soit muni de plusieurs microphones 10. Dans un autre exemple, le microphone 10 peut être intégré dans un autre équipement électronique installé dans le pneumatique 1, tel qu'un capteur de pression et/ou de température de type TMS, de l'anglais "tire monitoring system" pour contrôle automatique du pneu" ou TPMS, de l'anglais "tire-pressure monitoring system" pour contrôle automatique de la pression du pneu.

De préférence, le microphone 10 est associé à un émetteur sans fil, notamment de type radiofréquence, et en particulier du type utilisant la technologie Bluetooth Low Energy (Bluetooth à basse énergie), permettant de relayer l'enregistrement de la réponse acoustique à l'unité de traitement automatisée de données 11, de préférence disposée à l'extérieur du pneumatique 1, pour son traitement. On peut ainsi par exemple prévoir une antenne à l'intérieur du pneumatique 1. Dans le cas d'une communication sans fil, un receveur externe peut recevoir les signaux envoyés par les moyens de communication sans fil associés au microphone 10, et les relayer à l'unité de traitement automatisée de données 11.

Le microphone 10 est adapté pour acquérir le signal acoustique produit par le pneumatique 1 roulant sur la surface 8 du sol 7. Le microphone 10 disposé à l'intérieur du pneumatique 1 est également configuré pour transmettre la mesure du signal acoustique à l'unité de traitement automatisée de données 11, de préférence disposée à l'extérieur du pneumatique 1. L'unité de traitement automatisé de données peut être localisée directement à l'intérieur du pneumatique, et le traitement est alors effectué in situ.

L'unité de traitement automatisée de données 11 est quant à elle configurée pour associer, à chacune d'une pluralité de bandes de fréquence, une donnée représentative d'une puissance sonore moyenne mesurée dans ladite bande de fréquence à partir de la mesure du signal acoustique acquise, les données représentatives issues d'une mesure formant des variables d'un vecteur associé à ladite mesure, et pour déterminer des conditions de roulage d'un pneumatique sur un sol à l'aide d'une analyse discriminante des données fondée sur une base d'apprentissage formée d'un ensemble de vecteurs représentatifs chacun de conditions de roulage particulières.

### Exemple de mise en œuvre

Lorsque le véhicule 9 se déplace à la surface 8 du sol 7, le pneumatique 1 est au contact de cette surface 8 et roule sur celle-ci. La coopération entre le pneumatique 1 et la surface 8 génère des ondes sonores qui se propagent dans le pneumatique 1, produisant un son. Il s'agit du signal acoustique produit par le pneumatique 1 roulant sur la surface 8 du sol 7. L'amplitude et la fréquence de ce signal acoustique dépendent de multiples facteurs liés aux conditions de roulage. La première étape S1 consiste à acquérir une mesure du signal acoustique produit par le pneumatique 1 au moyen du microphone 10 disposé à l'intérieur du pneumatique 1. La mesure couvre typiquement un intervalle de temps généralement court, par exemple de l'ordre de 1 seconde, ou inférieur.

C'est l'analyse fréquentielle des amplitudes de cette mesure du signal acoustique qui permet de déterminer les conditions de roulage, et en particulier l'état de fermeté du sol 7. Lorsqu'un pneumatique 1 roule, différents modes de résonance acoustiques sont excités. Ces différents modes de résonnance acoustiques sont principalement liés à la géométrie de la cavité intérieure formée par le pneumatique 1 et le fond de jante 2. Or, cette géométrie varie en fonction de l'état de fermeté du sol 7.

Les inventeurs ont découvert que la disposition du microphone 10 à l'intérieur du pneumatique 1 et non pas à l'extérieur de celui-ci permet à la mesure du signal acoustique acquise de contenir des caractéristiques supplémentaires dont l'exploitation permet d'accéder à des informations très pertinentes concernant les conditions de roulage du véhicule 9. En effet, outre le positionnement du microphone au plus près du sol 7, donc près de l'interaction entre le pneumatique 1 et la surface 8 du sol 7, le placement du microphone 10 à l'intérieur du pneumatique 1 permet de mesurer et d'exploiter des caractéristiques sonores qui sont inaccessibles de l'extérieur du pneumatique 1.

Par exemple, le premier mode de cavité correspond à la résonance principale à l'intérieur du pneumatique 1. Ce premier mode de cavité est assimilable à une onde stationnaire de résonnance d'un tube fermé sur lui-même, qui dépend principalement de la longueur du tube lorsque le tube n'est pas écrasé. Avec un microphone 10 disposé à l'intérieur du pneumatique 1, on peut rendre compte non seulement du premier mode de cavité d'un pneumatique 1, mais également plusieurs de ses harmoniques, ce qui n'est pas possible avec un microphone placé à l'extérieur du pneumatique 1.

La mesure du signal acoustique est donc transmise à l'unité de traitement automatisé de données 11, laquelle associe (étape S3) à chacune d'une pluralité de bandes de fréquence une donnée représentative d'une puissance sonore moyenne mesurée dans ladite bande de fréquence à partir de la mesure du signal acoustique acquise. En vue de son traitement, la mesure du signal acoustique peut être échantillonnée de préférence à haute fréquence (plus de 40 kHz par exemple). Dans un autre exemple de réalisation, et afin d'économiser de l'énergie, on peut choisir d'échantillonner le signal à une fréquence plus basse, de l'ordre de la dizaine de kilohertz, par exemple 8kHz.

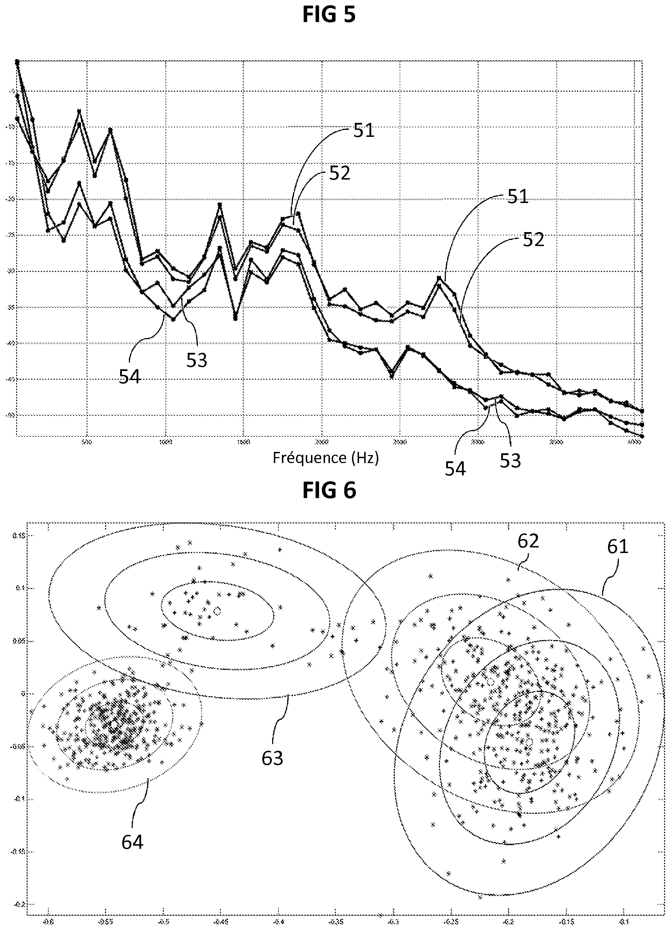

Plus précisément, une densité spectrale de puissance du signal acoustique sur un intervalle de fréquence donné est déterminée (étape S31). La figure 5 montre quatre exemples de spectre fréquentiels moyens de signaux acoustiques générés par un microphone 10 disposé à l'intérieur d'un même pneumatique 1 roulant sur des sols 7 présentant différents états de fermeté. Plus précisément, la figure 5 illustre des énergies spectrales (en dB) normalisées en fonction de la fréquence en hertz, pour un intervalle de fréquence compris entre 50 et 4000 Hz. une première courbe 51 correspond à un roulage sur une terre fraichement labourée. Une deuxième courbe 52 correspond à un roulage sur une terre meuble (terre labourée après un passage d'un tracteur agricole). Une troisième courbe 53 correspond à un roulage sur une terre compacte (chemin). Enfin, une quatrième courbe 54 correspond à un roulage sur un béton bitumineux (route).

On constate que les courbes 51, 52, 53, 54 suivent des profils assez similaires. Elles se distinguent cependant par un ordonnancement de leurs valeurs respectives. On peut ainsi classifier les conditions de roulage selon deux types de fermeté du sol. Un type de fermeté correspond à un état de sol dur (terre compacte et béton bitumineux), et l'autre type de fermeté correspond à un sol mou (terre labourée et terre meuble). De façon surprenante, le roulage sur des sols mous (courbes 51 et 52) produit plus de bruits, surtout en hautes fréquences, que le roulage sur des sols durs (courbes 53 et 54). Toutefois, on constate également qu'il est difficile de distinguer un roulage sur une terre compacte d'un roulage sur béton bitumineux, ou un roulage sur une terre fraichement labourée d'un roulage sur une terre meuble. De plus, pour certaines fréquences, les courbes sont assez rapprochées, de sorte qu'il peut même être difficile de distinguer un roulage sur un sol dur d'un roulage sur un sol mou avec le seul spectre.
On précise ici, à titre d'exemple, que la terre compacte peut également correspondre à un chemin, et le béton bitumeux à une route, dans un langage courant dans le domaine agricole. De la même façon, une terre fraichement labourée est par exemple une terre qui n'a subi aucun compactage après labour, à l'exception d'un compactage éventuel par les pneumatiques avant d'un tracteur dans le cas où le microphone serait installé à l'arrière du tracteur. Une terre meuble, quant à elle, peut désigner une terre qui a déjà été compactée par un ou deux passages de tracteur.

L'intervalle de fréquence est ensuite segmenté (étape S32) en une pluralité de bandes de fréquence de largeurs préalablement déterminées. Les largeurs des bandes de fréquence peuvent être fixes, par exemple de 100 Hz ou autre, ou bien varier en fonction de la fréquence, par exemple par tiers d'octave. L'intervalle de fréquence utiliser peut également varier en fonction des informations qu'on veut exploiter ou au contraire ignorer. Par exemple, le bruit généré par le moteur présente généralement une amplitude maximale comprise entre 50 Hz et 60 Hz, et on peut, pour ne pas prendre en compte celui-ci, faire démarrer l'intervalle de fréquence à 200 Hz.

On associe (étape S33) ensuite à chacune d'une pluralité de bandes de fréquence une donnée représentative d'une puissance sonore moyenne mesurée dans ladite bande de fréquence à partir de la mesure du signal acoustique acquise. Ces données représentatives associées aux différentes bandes de fréquences et issues d'une même mesure forment des variables d'un vecteur associé à ladite mesure. On obtient alors pour chaque mesure, un vecteur dont la dimension correspond aux nombres des bandes de fréquence retenues.

Il est possible de normaliser les données en divisant celles-ci (ou la mesure) par la puissance sonore totale sur l'ensemble de l'intervalle de fréquence. Cette normalisation permet d'atténuer l'influence de certains paramètres tels que les variations de vitesse, sans pour autant modifier de manière sensible la capacité d'analyse qu'il est possible de produire.

On met ensuite en oeuvre une analyse discriminante des données fondée sur une base d'apprentissage (étape S4), cette analyse discriminante fournissant une information sur l'état de fermeté du sol. Les méthodes d'analyse et de traitement statistiques des données sont connues en soi et ne font pas l'objet de cette invention. La méthode d'analyse discriminante linéaire qui a été utilisée a permis d'obtenir des résultats fiables et robustes.

La base d'apprentissage préexiste à la mise en oeuvre du procédé. Elle résulte typiquement d'une phase d'apprentissage au cours de laquelle on effectue un grand nombre de mesures en faisant varier de manière connue les conditions de roulage, et en particulier l'état de fermeté du sol. A chacune de ces mesures, on affecte un vecteur obtenu dans les conditions décrites ci-dessus. On constitue de la sorte une base d'apprentissage spécifique à un véhicule 9.

Une première étape de l'analyse discriminante consiste à déterminer les axes factoriels principaux qui permettent de réduire le nombre de dimensions au nombre juste nécessaire pour décrire les vecteurs affectés à chacune des mesures selon des axes orthogonaux. Le passage de l'espace vectoriel dont le nombre de dimensions est égal au nombre de bandes de fréquences, par exemple de dimension 20 ou 30, dans l'espace discriminant réduit se fait à l'aide d'une transformation linéaire.

Une deuxième étape consiste alors, à l'aide de l'analyse discriminante proprement dite à rechercher, dans cet espace discriminant réduit les zones dans lesquelles se situent les mesures obtenues pendant la phase d'apprentissage selon des conditions de roulage données. Puis, on calcule dans cet espace discriminant réduit le centre de gravité de la zone dans laquelle sont situés les points représentant une modalité ou une combinaison de modalités, ainsi qu'un intervalle de confiance représentatif de la dispersion des points d'une même zone par rapport à ce centre de gravité.

La figure 6 montre dans un espace à deux dimensions un exemple de répartition de mesures selon l'état de fermeté du sol. Un premier groupe 61 regroupe les mesures effectuées sur une terre labouré, un deuxième groupe 62 regroupe les mesures effectuées sur une terre meuble, un troisième groupe 63 regroupe les mesures effectuées sur une terre compacte, et un quatrième groupe 64 regroupe les mesures effectuées sur un béton bitumineux.

Les ellipses entourant chacun des groupes de points sont placées à un, deux et trois écarts types par rapport aux centre de gravité, et permettent d'évaluer la dispersion des mesures autour du centre de gravité, et surtout d'apprécier le taux de recouvrement d'une zone par rapport à une autre qui est représentatif du risque d'affectation à tort à une autre classification d'une mesure réalisée selon un état de fermeté différent. A partir de ces données, il est également possible de déterminer la probabilité d'appartenance d'une nouvelle mesure à un des états de fermeté du sol en évaluant la distance de ce point au centre de gravité de chacun de ses état de fermeté.

Si le troisième groupe 63 et le quatrième groupe 64 sont clairement distincts, ne se recoupant que sur leurs périphéries, le premier groupe 61 et le deuxième groupe 62 se chevauchent largement, à l'intérieur même de leur premier écart-type. Cela semble résulter de la proximité de fermeté du sol entre une terre fraichement labourée et une terre labourée ayant subi après un passage d'un tracteur agricole. On constate toutefois qu'il est aisé de distinguer un état de sol dur, correspondant aux groupes 63 et 64, et un état de sol mou, correspondant aux groupes 61 et 62. Par conséquent, la base d'apprentissage peut classifier les vecteurs selon au moins deux états de fermeté du sol, l'un correspondant à un état de sol dur, l'autre correspondant à un état de sol mou. Plus précisément, les vecteurs classés par la base d'apprentissage dans un état correspondant à sol dur comprennent les vecteurs représentatifs de conditions de roulage sur béton bitumeux et terre ultracompacte, et les vecteurs classés par la base d'apprentissage dans un état correspondant à un sol mou comprennent les vecteurs représentatifs de conditions de roulage sur terre labourée.

Ainsi, en soumettant le vecteur associé à la mesure à l'analyse discriminante, il est possible de comparer celui-ci aux vecteurs de la base d'apprentissage, et d'en déduire une information sur l'état de fermeté du sol (étape S5), permettant de déterminer l'état de fermeté du sol correspondant au vecteur associé à la mesure. Il suffit pour cela de déterminer une distance entre le vecteur associé à la mesure à l'analyse discriminante et les vecteurs de la base d'apprentissage ou un point statistique dérivé de ceux-ci, pour attribuer à la mesure une information sur la fermeté du sol basé sur cette distance.

La disposition du microphone 10 à l'intérieur du pneumatique 1 et la mise en oeuvre d'une analyse discriminante permet de déterminer efficacement l'état de fermeté du sol. Cette information est précieuse et très utile pour tout véhicule 9 roulant sur des surfaces de natures variées. Par exemple, dans le cas d'une transmission intégrale, il est généralement préjudiciable de rouler en quatre roues motrices sur terrain sec et accrocheur, ce qui nécessite la mise en place de stratégies variées, complexes et non optimales, comme par exemple la nécessité d'un différentiel central ou l'enclenchement d'un visco-coupleur, dont la commande requiert la constatation effective d'un défaut de roulage (typiquement une différence de vitesse entre les roues avant et arrière). La connaissance de l'état de fermeté du sol permet au contraire, avant même que ne se produise le défaut de roulage, d'en informer le conducteur en transmettant cette information à une interface homme-machine (écran, voyant) ou de mettre en oeuvre automatiquement des actions appropriées (par exemple le passage en transmission intégral ou une modification de la répartition de la motricité) en transmettant cette information à un dispositif de commande.

Cette information sur l'état de fermeté du sol peut également être utilisée dans le domaine du travail de la terre (agriculture ou travaux publiques). Par exemple, un champ présente de grandes variations en termes de fermeté du sol, généralement liées à la compacité du sol. C'est notamment le cas dans les zones de passages de véhicule (traces de traitement ou zones de retournement), qui doivent être identifiées pour être travaillée, par exemple au moyen d'un décompacteur. L'état de fermeté du sol peut également être utilisé pour avertir du danger d'une terre trop peu ferme, qui peut faire s'embourber un véhicule 9 trop lourd. L'information sur l'état de fermeté du sol peut également être utilisée pour mettre en oeuvre une adaptation automatique de la pression du pneumatique 1 visant à limiter le tassement du sol 7, en commandant un dispositif de télégonflage du pneumatique.

Par ailleurs, selon l'état de fermeté du sol, on peut mettre en outre en oeuvre une détermination d'autres conditions de roulage par analyse discriminante des données sur la partie de la base d'apprentissage correspondant audit état de fermeté. Cela suppose néanmoins que la base d'apprentissage comprenne des vecteurs représentatifs de différentes variations d'une même condition de roulage, comme par exemple le niveau de glissement du pneumatique 1 par rapport au sol, ou la pression dudit pneumatique.

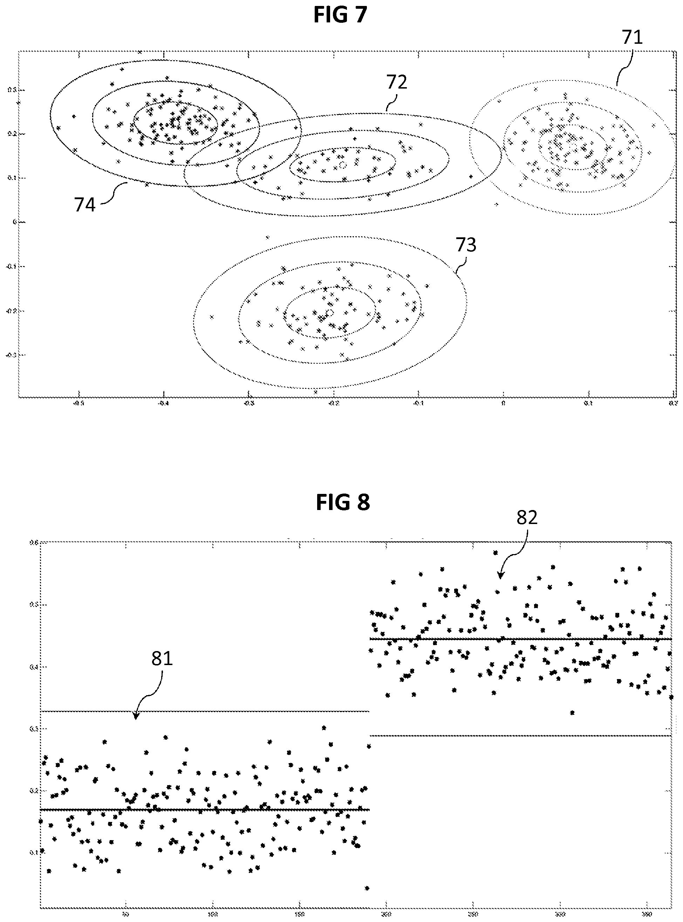

En particulier, lorsqu'il est observé que l'état de fermeté du sol déterminé correspond à un sol 7 mou, on peut déterminer ainsi un niveau de glissement du pneumatique 1. La figure 7 montre dans un espace à deux dimensions un exemple de répartition de mesures selon différents glissements constatés lors d'un roulage sur un sol mou. Les vecteurs sont regroupés en quatre groupes correspondant à des niveaux de glissement différents du pneumatique 1 : un premier groupe 71 correspond à une absence de glissement dû à une bonne adhérence, un deuxième groupe 72 correspond à un glissement faible, un troisième groupe 73 correspond à un glissement moyen, et un quatrième groupe 74 correspond à un glissement très fort. L'information sur le niveau de glissement ainsi déterminée peut notamment être utilisée pour en avertir le conducteur ou pour mettre en oeuvre des moyens susceptibles d'y remédier (par exemple en modifiant la répartition de la motricité entre les roues).

Lorsqu'il est observé que l'état de fermeté du sol déterminé correspond à un sol 7 dur, on peut également déterminer un niveau de pression du pneumatique 1 grâce à une seconde analyse discriminante. La figure 8 montre dans un espace à une dimension (axe vertical) un exemple de répartition de mesures pour deux pressions différentes, à 1 bar et 1,6 bar. L'axe horizontal représente ici simplement l'ordonnancement des mesures.

Les vecteurs de mesures se répartissent en deux groupes distincts : un premier groupe 81 correspondant aux mesures effectuées avec une pression de 1 bar, qui présente une répartition centrée sur une valeur de 0,18, et un second groupe 82 correspondant aux mesures effectuées avec une pression de 1,6 bar qui présente une répartition centrée sur une valeur de 0,45. On peut donc, avec une valeur discriminante par exemple ici de 0,31, facilement distinguer une mesure à une pression de 1 bar d'une mesure à une pression de 1,6 bar. En ajoutant d'autres pressions, il est possible de déterminer dans quelle gamme de pression se situe la pression du pneumatique 1. On peut ainsi avertir l'utilisateur lorsque le pneumatique 1 présente une pression inadaptée, ou bien encore utiliser cette information sur la pression dans le cadre de la commande d'un dispositif de télégonflage du pneumatique 1.

Le véhicule 9 peut comprendre en outre des moyens de géolocalisation, notamment un receveur d'un système de radionavigation, comme par exemple d'un système de positionnement par satellites type GPS ou Galileo. Le véhicule peut alors comprendre des moyens de synchronisation de l'acquisition acoustique (c'est-à-dire le signal acoustique acquis par le microphone ou les données sur l'état du sol résultant du traitement dudit signal acoustique) et des données de géolocalisation. Par exemple, l'unité de traitement automatisée de données 11 ou un autre dispositif peut recevoir les données de géolocalisation depuis les moyens de géolocalisation et l'acquisition acoustique issue du microphone 10, et les associer l'un à l'autre, en prenant éventuellement en compte des indications de temps, afin de les synchroniser. Il est alors possible de déterminer pour chaque localisation le signal acoustique correspondant, ou directement l'état du sol résultant du traitement du signal acoustique. On peut ainsi établir une cartographie de la fermeté des sols sur lesquels a roulé le véhicule 9. Pour ce faire, il est possible de prévoir des moyens de transmission des données synchronisées à un serveur distant.

L'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Procédé de détermination de conditions de roulage d'un pneumatique (1) sur un sol (7), ledit pneumatique étant monté sur un véhicule (9), ledit procédé comprenant les étapes dans lesquelles :
- une mesure d'un signal acoustique produit par le pneumatique (1) roulant sur la surface (8) du sol (7) est acquise par un microphone (10),
- pour chacune d'une pluralité de bandes de fréquence, association à ladite bande de fréquences d'une donnée représentative d'une puissance sonore moyenne mesurée dans ladite bande de fréquence à partir de la mesure du signal acoustique acquise, les données représentatives associées aux différentes bandes de fréquences et issues d'une même mesure formant des variables d'un vecteur associé à ladite mesure,
- détermination de l'état du sol (7) correspondant au vecteur associé à la mesure en mettant en oeuvre une analyse discriminante des données fondée sur une base d'apprentissage,
**caractérisé en ce que** le signal acoustique produit par le pneumatique (1) est acquis par un microphone (10) disposé à l'intérieur du pneumatique (1), l'analyse discriminante fournissant une information sur l'état de fermeté du sol.

2. Procédé selon la revendication 1, dans lequel, selon l'état de fermeté du sol, on met en outre en oeuvre une détermination d'un niveau de glissement du pneumatique (1) par analyse discriminante des données sur la partie de la base d'apprentissage correspondant audit état de fermeté.

3. Procédé selon la revendication 1 ou 2, dans lequel, selon l'état de fermeté du sol, on met en outre en oeuvre une détermination d'un niveau de pression du pneumatique (1) par analyse discriminante des données sur la partie de la base d'apprentissage correspondant audit état de fermeté.

4. Procédé selon l'une des revendications précédentes, dans lequel la base d'apprentissage est formée d'un ensemble de vecteurs représentatifs chacun de conditions de roulage respectives.

5. Procédé selon l'une des revendications précédentes, dans lequel la base d'apprentissage classifie les vecteurs selon au moins deux états de fermeté du sol, l'un correspondant à un état de sol dur, l'autre correspondant à un état de sol mou.

6. Procédé selon la revendication précédente, dans lequel les vecteurs classés par la base d'apprentissage dans un état correspondant à sol dur comprennent les vecteurs représentatifs de conditions de roulage sur béton bitumeux et terre ultracompacte, et les vecteurs classés par la base d'apprentissage dans un état correspondant à un sol mou comprennent les vecteurs représentatifs de conditions de roulage sur terre labourée.

7. Equipement pour véhicule comprenant
- un microphone (10) configuré pour mesurer un signal acoustique produit par le pneumatique (1) roulant sur la surface du sol, et
- une unité de traitement automatisé de données (11) configurée pour associer à chacune d'une pluralité de bandes de fréquence une donnée représentative d'une puissance sonore moyenne mesurée dans ladite bande de fréquence à partir de la mesure du signal acoustique acquise, les données représentatives associées aux différentes bandes de fréquences et issues d'une même mesure formant des variables d'un vecteur associé à ladite mesure, et pour déterminer l'état du sol correspondant au vecteur associé à la mesure en mettant en oeuvre une analyse discriminante des données fondée sur une base d'apprentissage, l'analyse discriminante fournissant une information sur l'état de fermeté du sol,
l'équipement étant caractérisé pour mettre en oeuvre le procédé selon l'une quelconque des revendications précédentes lorsque ledit équipement équipe un véhicule, et que ledit microphone (10) est adapté pour être disposé à l'intérieur d'un pneumatique (1) monté sur le véhicule (9).

8. Equipement selon la revendication précédente, dans lequel le microphone (10) est associé à un émetteur sans fil configuré pour transmettre à l'unité de traitement automatisé de données (11) la mesure d'un signal acoustique, ladite unité de traitement automatisé de données étant configuré pour être disposée à l'extérieur du pneumatique (1).

9. Véhicule comprenant un équipement selon l'une des revendications 7 à 8, dans lequel le microphone est disposé à l'intérieur d'un pneumatique (1) monté sur le véhicule.

10. Véhicule selon la revendication 9, dans lequel le microphone (10) est solidaire d'une jante (2) portant le pneumatique (1).

11. Véhicule selon l'une des revendications 9 ou 10, dans lequel le véhicule comporte en outre des moyens de géolocalisation et des moyens de synchronisation de l'acquisition acoustique et des données de géolocalisation.

## Patentansprüche

1. Verfahren zur Bestimmung von Rollbedingungen eines Reifens (1) auf einem Boden (7), wobei der Reifen an einem Fahrzeug (9) angebracht ist, wobei das Verfahren die Schritte umfasst, in denen:
- eine Messung eines akustischen Signals, das von dem auf der Oberfläche (8) des Bodens (7) rollenden Reifen (1) erzeugt wird, von einem Mikrofon (10) erfasst wird,
- für jedes von mehreren Frequenzbändern eine Zuordnung einer Dateneinheit, die für eine ausgehend von der erfassten Messung des akustischen Signals in dem Frequenzband gemessene mittlere Schallleistung repräsentativ ist, zu dem Frequenzband erfolgt, wobei die repräsentativen Daten, die den verschiedenen Frequenzbändern zugeordnet sind und von ein und derselben Messung stammen, Variable eines Vektors bilden, welcher der Messung zugeordnet ist,
- eine Bestimmung des Zustands des Bodens (7) erfolgt, der dem der Messung zugeordneten Vektor entspricht, indem ein Diskriminanzanalyse der Daten durchgeführt wird, die auf einer Lernbasis beruht,
**dadurch gekennzeichnet, dass** das von dem Reifen (1) erzeugte akustische Signal von einem Mikrofon (10) erfasst wird, das im Inneren des Reifens (1) angeordnet ist, wobei die Diskriminanzanalyse eine Information über den Festigkeitszustand des Bodens liefert.

2. Verfahren nach Anspruch 1, wobei je nach dem Festigkeitszustand des Bodens außerdem eine Bestimmung eines Schlupfniveaus des Reifens (1) durch Diskriminanzanalyse der Daten auf dem Teil der Lernbasis, der dem Festigkeitszustand entspricht, durchgeführt wird.

3. Verfahren nach Anspruch 1 oder 2, wobei je nach dem Festigkeitszustand des Bodens außerdem eine Bestimmung eines Druckniveaus des Reifens (1) durch Diskriminanzanalyse der Daten auf dem Teil der Lernbasis, der dem Festigkeitszustand entspricht, durchgeführt wird.

4. Verfahren nach einem der vorhergehenden Ansprüche, wobei die Lernbasis von einer Menge von Vektoren gebildet wird, die jeweils für jeweilige Rollbedingungen repräsentativ sind.

5. Verfahren nach einem der vorhergehenden Ansprüche, wobei die Lernbasis die Vektoren nach wenigstens zwei Festigkeitszuständen des Bodens klassifiziert, wobei einer einem harten Bodenzustand entspricht und der andere einem weichen Bodenzustand entspricht.

6. Verfahren nach dem vorhergehenden Anspruch, wobei die Vektoren, die von der Lernbasis in einen Zustand klassifiziert werden, der einem harten Boden entspricht, die Vektoren umfassen, die für Rollbedingungen auf Asphaltbeton und äußerst kompakter Erde repräsentativ sind, und die Vektoren, die von der Lernbasis in einen Zustand klassifiziert werden, der einem weichen Boden entspricht, die Vektoren umfassen, die für Rollbedingungen auf gepflügtem Boden repräsentativ sind.

7. Einrichtung für ein Fahrzeug, welche umfasst:
- ein Mikrofon (10), das dafür ausgelegt ist, ein akustisches Signal zu messen, das von dem auf der Oberfläche des Bodens rollenden Reifen (1) erzeugt wird, und
- eine Einheit zur automatisierten Verarbeitung von Daten (11), die dafür ausgelegt ist, jedem von mehreren Frequenzbändern eine Dateneinheit zuzuordnen, die für eine ausgehend von der erfassten Messung des akustischen Signals in dem Frequenzband gemessene mittlere Schallleistung repräsentativ ist, wobei die repräsentativen Daten, die den verschiedenen Frequenzbändern zugeordnet sind und von ein und derselben Messung stammen, Variable eines Vektors bilden, welcher der Messung zugeordnet ist, und den Zustand des Bodens zu bestimmen, der dem der Messung zugeordneten Vektor entspricht, indem ein Diskriminanzanalyse der Daten durchgeführt wird, die auf einer Lernbasis beruht, wobei die Diskriminanzanalyse eine Information über den Festigkeitszustand des Bodens liefert
wobei die Einrichtung **dadurch gekennzeichnet ist, dass** sie das Verfahren nach einem der vorhergehenden Ansprüche durchführt, wenn die Einrichtung bei einem Fahrzeug eingesetzt wird, und dass das Mikrofon (10) dafür eingerichtet ist, im Inneren eines Reifens (1) angeordnet zu werden, der an dem Fahrzeug (9) angebracht ist.

8. Einrichtung nach dem vorhergehenden Anspruch, wobei das Mikrofon (10) einem drahtlosen Sender zugeordnet ist, der dafür ausgelegt ist, an die Einheit zur automatisierten Verarbeitung von Daten (11) die Messung eines akustischen Signals zu übertragen, wobei die Einheit zur automatisierten Verarbeitung von Daten dafür ausgelegt ist, außerhalb des Reifens (1) angeordnet zu werden.

9. Fahrzeug, welches eine Einrichtung nach einem der Ansprüche 7 bis 8 umfasst, wobei das Mikrofon im Inneren eines Reifens (1) angeordnet ist, der an dem Fahrzeug angebracht ist.

10. Fahrzeug nach Anspruch 9, wobei das Mikrofon (10) mit einer Felge (2) fest verbunden ist, die den Reifen (1) trägt.

11. Fahrzeug nach einem der Ansprüche 9 oder 10, wobei das Fahrzeug außerdem Geolokalisierungsmittel und Mittel zur Synchronisation der akustischen Erfassung und der Geolokalisierungsdaten aufweist.

## Claims

1. Method for determining rolling conditions of a tyre (1) on a ground (7), said tyre being mounted on a vehicle (9), said method comprising the steps in which:
- a measurement of an acoustic signal produced by the tyre (1) rolling on the surface (8) of the ground (7) is acquired by a microphone (10),
- for each of a plurality of frequency bands, association with said frequency band of a datum representative of an average sound power measured in said frequency band from the measurement of the acoustic signal acquired, the representative data associated with the different frequency bands and derived from one and the same measurement forming variables of a vector associated with said measurement,
- determination of the state of the ground (7) corresponding to the vector associated with the measurement by implementing a discriminative analysis of the data based on a learning base,
**characterized in that** the acoustic signal produced by the tyre (1) is acquired by a microphone (10) disposed inside the tyre (1), the discriminative analysis supplying information on the state of firmness of the ground.

2. Method according to Claim 1, in which, according to the state of firmness of the ground, a determination of a level of slip of the tyre (1) is also implemented by discriminative analysis of the data on the part of the learning base corresponding to said state of firmness.

3. Method according to Claim 1 or 2, in which, according to the state of firmness of the ground, a determination of a pressure level of the tyre (1) is also implemented by discriminative analysis of the data on the part of the learning base corresponding to said state of firmness.

4. Method according to one of the preceding claims, in which the learning base is formed by a set of vectors each representative of respective rolling conditions.

5. Method according to one of the preceding claims, in which the learning base classifies the vectors according to at least two states of firmness of the ground, one corresponding to a hard ground state, the other corresponding to a soft ground state.

6. Method according to the preceding claim, in which the vectors classified by the learning base in a state corresponding to a hard ground comprise the vectors representative of rolling conditions on bituminous concrete and ultracompact earth, and the vectors classified by the learning base in a state corresponding to soft ground comprise the vectors representative of rolling conditions on ploughed earth.

7. Equipment for a vehicle comprising
- a microphone (10) configured to measure an acoustic signal produced by the tyre (1) rolling on the surface of the ground, and
- an automated data processing unit (11) configured to associate with each of a plurality of frequency bands a datum representative of an average sound power measured in said frequency band from the measurement of the acoustic signal acquired, the representative data associated with the different frequency bands and derived from one and the same measurement forming variables of a vector associated with said measurement, and to determine the state of the ground corresponding to the vector associated with the measurement by implementing a discriminative analysis of the data based on a learning base, the discriminative analysis supplying information on the state of firmness of the ground,
the equipment being characterized to implement the method according to any one of the preceding claims when said equipment equips a vehicle and when said microphone is adapted to be installed within a tyre (1) mounted on the vehicle (9).

8. Equipment according to the preceding claim, in which the microphone (10) is associated with a wireless transmitter configured to transmit to the automated data processing unit (11) the measurement of an acoustic signal, said automated data processing unit being configured to be disposed outside of the tyre (1).

9. Vehicle comprising equipment according to one of Claims 7 and 8, in which the microphone is disposed inside a tyre (1) mounted on the vehicle.

10. Vehicle according to Claim 9, in which the microphone (10) is secured to a rim (2) bearing the tyre (1).

11. Vehicle according to one of Claims 9 and 10, in which the vehicle also comprises geolocation means and means for synchronizing the acoustic acquisition and the geolocation data.
